# EUROPEAN PATENT APPLICATION

(11) **EP 4 481 629 A1**
(43) Date of publication of application: **25.12.2024**
(21) Application number: 23209832.7
(22) Date of filing: 14.11.2023
(51) Int. Cl.: G06N 5/025, G06N 5/045

(54) **DEFINING RULES ENGINE INPUTS AND OUTPUTS FOR RULESET EXPLANATIONS**

(30) Priority: 21.06.2023 US 202318338904
(71) Applicant: Red Hat, Inc., Raleigh, NC 27601 (US)
(72) Inventor: GEADA, Robert, Raleigh (US); VIEIRA, Rui, Raleigh (US)
(74) Representative: Murgitroyd & Company

(57) **Abstract**

A computing device obtains a plurality of input objects. The computing device determines settable attributes of each input object of the plurality of input objects and creates a subset of the settable attributes based on an input filter. The computing device inserts the subset of the settable attributes into a rules engine, the rules engine comprising a set of rules evaluated with an input and producing an output during an execution of the rules engine. The computing device determines, during an execution of the rules engine, a plurality of output objects created during the execution of the rules engine and gettable attributes of each output object of the plurality of output objects and creates a subset of the gettable attributes based on an output filter. The computing device stores rules and corresponding gettable attributes and values of the gettable attributes based on the subset of the gettable attributes in memory.

## Description

### BACKGROUND

Rules engines are systems that define the computational logic of complex systems with rules that define pieces of information. Rules engines with a large number of rules or with complex rules can become difficult to be easily or quickly understood. Explainable Artificial Intelligence (XAI) seeks to investigate complex systems and models, however in order to use XAI to explain complex rules engines, a function that receives a fixed input schema and returns a fixed output schema is desired.

### SUMMARY

The examples disclosed herein implement defining rules engine inputs and outputs for ruleset explanations. The inputs to a rules engine can be defined as the factors that induce change in the output, such as the settable attributes of input objects. The output to the rules engine can be obtained and defined as the values created, modified, or deleted during the evaluation of the rules of the rules engine, such as the gettable attributes of the objects in the rules engine. An XAI algorithm can then be used to explain the rules engine by using the defined inputs and outputs.

According to an aspect of the present disclosure there is provided a method, comprising: obtaining, by a computing device, a plurality of input objects; determining, by the computing device, settable attributes of each input object of the plurality of input objects; creating, by the computing device, a subset of the settable attributes based on an input filter; inserting, by the computing device, the subset of the settable attributes into a rules engine, the rules engine comprising a set of rules evaluated with an input and producing an output during an execution of the rules engine; determining, by the computing device during an execution of the rules engine, a plurality of output objects created during the execution of the rules engine and gettable attributes of each output object of the plurality of output objects; creating, by the computing device, a subset of the gettable attributes based on an output filter; and storing, in a memory of the computing device, one or more rules and corresponding gettable attributes and values of the gettable attributes based on the subset of the gettable attributes.

The method may further comprise: subsequent to storing, in the memory of the computing device, one or more rules and corresponding gettable attributes and values of the gettable attributes based on the subset of the gettable attributes, applying one or more explainable artificial intelligence techniques to the rules engine using inputs corresponding to the subset of settable attributes and outputs corresponding to the subset of gettable attributes. The settable attributes may comprise one or more attributes of an input object of the plurality of input objects that can be set with a value. Determining the settable attributes of each input object of the plurality of input objects may comprise: for each input object of the plurality of input objects: identifying attributes of the input object that can be set with a value or one or more sub-objects of the input object; and for each sub-object of the one or more sub-objects of the input object: identifying attributes of the sub-object that can be set with a value. The method may further comprise: subsequent to determining the settable attributes of each input object of the plurality of input objects, overwriting one or more of the settable attributes. The input filter may include or exclude one or more of one or more rules of the rules engine, one or more field names of the plurality of input objects, and one or more input objects of the plurality of input objects. Creating the subset of the settable attributes based on the input filter may comprise: creating a data structure comprising the settable attributes of each input object of the plurality of input objects and values corresponding to the settable attributes; obtaining the input filter; and determining, based on the input filter, the subset of the settable attributes, the subset of the settable attributes including settable attributes in the data structure that meet criteria of the input filter. The gettable attributes may comprise one or more attributes of an output object of the plurality of output objects that are defined by a value that can be retrieved. Determining, during the execution of the rules engine, the plurality of output objects created during the execution of the rules engine and the gettable attributes of each output object of the plurality of output objects may comprise: for each output object of the plurality of output objects: identifying attributes of the output object that are defined by a value that can be retrieved or one or more sub-objects of the output object; and for each sub-object of the one or more sub-objects of the output object: identifying attributes of the sub-object that are defined by a value that can be retrieved. Identifying the attributes of the output object may comprise identifying values of the output object created, modified, or deleted during the execution of the rules engine, and identifying the attributes of the sub-object comprises identifying values of the sub-object created, modified, or deleted during the execution of the rules engine. The output filter may include or exclude one or more of one or more rules of the rules engine, one or more field names of the plurality of output objects, and one or more output objects of the plurality of output objects. The method may further comprise: during the execution of the rules engine: storing, in the memory of the computing device, each output object of the plurality of output objects prior to completion of the execution of the rules engine. Creating the subset of the gettable attributes based on the output filter may comprise: creating a data structure comprising the gettable attributes of each output object of the plurality of output objects, values corresponding to the gettable attributes, and rules corresponding to the gettable attributes; obtaining the output filter; and determining, based on the output filter, the subset of gettable attributes, the subset of gettable attributes including gettable attributes in the data structure that meet criteria of the output filter. The method may further comprise: during the execution of the rules engine: determining a first set of values for each output object of the plurality of output objects prior to an execution of a rule of the rules engine; and determining a second set of values for each output object of the plurality of output objects subsequent to the execution of the rule of the rules engine. The method may further comprise: subsequent to the execution of the rule engine, determining a difference between a first value from among the first set of values and a second value from among the second set of values, wherein the first value and the second value correspond to an output object of the plurality of output objects; and identifying the difference as an output of the execution of the rule engine. Storing, in the memory of the computing device, one or more rules and corresponding gettable attributes and values of the gettable attributes based on the subset of the gettable attributes may comprise: creating a data structure comprising one or more rules, each rule corresponding to a gettable attribute from among the subset of the gettable attributes and a value of the gettable attribute, wherein the data structure comprises a table, a graph, or a map. The method may further comprise: subsequent to creating the subset of the gettable attributes based on the output filter, inserting the subset of the gettable attributes into the rules engine; determining, by a monitor in the rules engine during a second execution of the rules engine, whether a gettable attribute of the subset of gettable attributes is obtained; and recording a value of the gettable attribute as an output of the rules engine.

According to a further aspect of the present disclosure there is provided a computing device, comprising: a memory; and a processor device coupled to the memory, wherein the processor device is configured to: obtain a plurality of input objects; determine settable attributes of each input object of the plurality of input objects; create a subset of the settable attributes based on an input filter; insert the subset of the settable attributes into a rules engine, the rules engine comprising a set of rules evaluated with an input and producing an output during an execution of the rules engine; determine, during an execution of the rules engine, a plurality of output objects created during the execution of the rules engine and gettable attributes of each output object of the plurality of output objects; create a subset of the gettable attributes based on an output filter; and store, in the memory, one or more rules and corresponding gettable attributes and values of the gettable attributes based on the subset of the gettable attributes.

The processor device may further be configured to: subsequent to storing, in the memory of the computing device, one or more rules and corresponding gettable attributes and values of the gettable attributes based on the subset of the gettable attributes, apply one or more explainable artificial intelligence techniques to the rules engine using inputs corresponding to the subset of settable attributes and outputs corresponding to the subset of gettable attributes. The settable attributes may comprise one or more attributes of an input object of the plurality of input objects that can be set with a value. Determining the settable attributes of each input object of the plurality of input objects may comprise: for each input object of the plurality of input objects: identifying attributes of the input object that can be set with a value or one or more sub-objects of the input object; and for each sub-object of the one or more sub-objects of the input object: identifying attributes of the sub-object that can be set with a value. The processor device may further be configured to: subsequent to determining the settable attributes of each input object of the plurality of input objects, overwrite one or more of the settable attributes. The input filter may include or exclude one or more of one or more rules of the rules engine, one or more field names of the plurality of input objects, and one or more input objects of the plurality of input objects. Creating the subset of the settable attributes based on the input filter may comprise: creating a data structure comprising the settable attributes of each input object of the plurality of input objects and values corresponding to the settable attributes; obtaining the input filter; and determining, based on the input filter, the subset of the settable attributes, the subset of the settable attributes including settable attributes in the data structure that meet criteria of the input filter. Determining, during the execution of the rules engine, the plurality of output objects created during the execution of the rules engine and the gettable attributes of each output object of the plurality of output objects may comprise: for each output object of the plurality of output objects: identifying attributes of the output object that are defined by a value that can be retrieved or one or more sub-objects of the output object; and for each sub-object of the one or more sub-objects of the output object: identifying attributes of the sub-object that are defined by a value that can be retrieved Identifying the attributes of the output object may comprise identifying values of the output object created, modified, or deleted during the execution of the rules engine, and identifying the attributes of the sub-object comprises identifying values of the sub-object created, modified, or deleted during the execution of the rules engine. The output filter may include or exclude one or more of one or more rules of the rules engine, one or more field names of the plurality of output objects, and one or more output objects of the plurality of output objects. The processor device may further be configured to: during the execution of the rules engine: store, in the memory of the computing device, each output object of the plurality of output objects prior to completion of the execution of the rules engine. Creating the subset of the gettable attributes based on the output filter may comprise: creating a data structure comprising the gettable attributes of each output object of the plurality of output objects, values corresponding to the gettable attributes, and rules corresponding to the gettable attributes; obtaining the output filter; and determining, based on the output filter, the subset of gettable attributes, the subset of gettable attributes including gettable attributes in the data structure that meet criteria of the output filter. The processor device may further be configured to: during the execution of the rules engine: determine a first set of values for each output object of the plurality of output objects prior to an execution of a rule of the rules engine; and determine a second set of values for each output object of the plurality of output objects subsequent to the execution of the rule of the rules engine. The processor device may be further configured to, subsequent to the execution of the rule engine, determine a difference between a first value from among the first set of values and a second value from among the second set of values, wherein the first value and the second value correspond to an output object of the plurality of output objects; and identify the difference as an output of the execution of the rule engine. Storing, in the memory of the computing device, one or more rules and corresponding gettable attributes and values of the gettable attributes based on the subset of the gettable attributes may comprise: creating a data structure comprising one or more rules, each rule corresponding to a gettable attribute from among the subset of the gettable attributes and a value of the gettable attribute, wherein the data structure comprises a table, a graph, or a map. The processor device may further be configured to: subsequent to creating the subset of the gettable attributes based on the output filter, inserting the subset of the gettable attributes into the rules engine; determining, by a monitor in the rules engine during a second execution of the rules engine, whether a gettable attribute of the subset of gettable attributes is obtained; and recording a value of the gettable attribute as an output of the rules engine.

According to a still further aspect of the present disclosure there is provided a non-transitory computer-readable storage medium that includes computer-executable instructions that, when executed, cause one or more processor devices to: obtain a plurality of input objects; determine settable attributes of each input object of the plurality of input objects; create a subset of the settable attributes based on an input filter; insert the subset of the settable attributes into a rules engine, the rules engine comprising a set of rules evaluated with an input and producing an output during an execution of the rules engine; determine, during an execution of the rules engine, a plurality of output objects created during the execution of the rules engine and gettable attributes of each output object of the plurality of output objects; create a subset of the gettable attributes based on an output filter; and store, in a memory coupled to the one or more processor devices, one or more rules and corresponding gettable attributes and values of the gettable attributes based on the subset of the gettable attributes.

The one or more processor devices may further be configured to: subsequent to storing, in the memory of the computing device, one or more rules and corresponding gettable attributes and values of the gettable attributes based on the subset of the gettable attributes, apply one or more explainable artificial intelligence techniques to the rules engine using inputs corresponding to the subset of settable attributes and outputs corresponding to the subset of gettable attributes. The settable attributes may comprise one or more attributes of an input object of the plurality of input objects that can be set with a value. Determining the settable attributes of each input object of the plurality of input objects may comprise: for each input object of the plurality of input objects: identifying attributes of the input object that can be set with a value or one or more sub-objects of the input object; and for each sub-object of the one or more sub-objects of the input object: identifying attributes of the sub-object that can be set with a value. The one or more processor devices may further be configured to: subsequent to determining the settable attributes of each input object of the plurality of input objects, overwrite one or more of the settable attributes. The input filter may include or exclude one or more of one or more rules of the rules engine, one or more field names of the plurality of input objects, and one or more input objects of the plurality of input objects. Creating the subset of the settable attributes based on the input filter may comprise: creating a data structure comprising the settable attributes of each input object of the plurality of input objects and values corresponding to the settable attributes; obtaining the input filter; and determining, based on the input filter, the subset of the settable attributes, the subset of the settable attributes including settable attributes in the data structure that meet criteria of the input filter. Determining, during the execution of the rules engine, the plurality of output objects created during the execution of the rules engine and the gettable attributes of each output object of the plurality of output objects may comprise: for each output object of the plurality of output objects: identifying attributes of the output object that are defined by a value that can be retrieved or one or more sub-objects of the output object; and for each sub-object of the one or more sub-objects of the output object: identifying attributes of the sub-object that are defined by a value that can be retrieved Identifying the attributes of the output object may comprise identifying values of the output object created, modified, or deleted during the execution of the rules engine, and identifying the attributes of the sub-object comprises identifying values of the sub-object created, modified, or deleted during the execution of the rules engine. The output filter may include or exclude one or more of one or more rules of the rules engine, one or more field names of the plurality of output objects, and one or more output objects of the plurality of output objects. The one or more processor devices may further be configured to: during the execution of the rules engine: store, in the memory of the computing device, each output object of the plurality of output objects prior to completion of the execution of the rules engine. Creating the subset of the gettable attributes based on the output filter may comprise: creating a data structure comprising the gettable attributes of each output object of the plurality of output objects, values corresponding to the gettable attributes, and rules corresponding to the gettable attributes; obtaining the output filter; and determining, based on the output filter, the subset of gettable attributes, the subset of gettable attributes including gettable attributes in the data structure that meet criteria of the output filter. The one or more processor devices may further be configured to: during the execution of the rules engine: determine a first set of values for each output object of the plurality of output objects prior to an execution of a rule of the rules engine; and determine a second set of values for each output object of the plurality of output objects subsequent to the execution of the rule of the rules engine. The one or more processor devices may be further configured to, subsequent to the execution of the rule engine, determine a difference between a first value from among the first set of values and a second value from among the second set of values, wherein the first value and the second value correspond to an output object of the plurality of output objects; and identify the difference as an output of the execution of the rule engine. Storing, in the memory of the computing device, one or more rules and corresponding gettable attributes and values of the gettable attributes based on the subset of the gettable attributes may comprise: creating a data structure comprising one or more rules, each rule corresponding to a gettable attribute from among the subset of the gettable attributes and a value of the gettable attribute, wherein the data structure comprises a table, a graph, or a map. The one or more processor devices may further be configured to: subsequent to creating the subset of the gettable attributes based on the output filter, inserting the subset of the gettable attributes into the rules engine; determining, by a monitor in the rules engine during a second execution of the rules engine, whether a gettable attribute of the subset of gettable attributes is obtained; and recording a value of the gettable attribute as an output of the rules engine.

Individuals will appreciate the scope of the disclosure and realize additional aspects thereof after reading the following detailed description of the examples in association with the accompanying drawing figures.

### BRIEF DESCRIPTION OF THE DRAWINGS

The accompanying drawing figures incorporated in and forming a part of this specification illustrate several aspects of the disclosure and, together with the description, serve to explain the principles of the disclosure.
Figure 1 is a block diagram of a computing device in which examples of defining rules engine inputs and outputs for ruleset explanations may be practiced;
Figure 2 is a flowchart illustrating operations performed by the computing device of Figure 1 for defining rules engine inputs and outputs for ruleset explanations, according to one example;
Figure 3 is a block diagram of the computing device of Figure 1 for defining rules engine inputs and outputs for ruleset explanations, according to one example;
Figure 4 is a block diagram of the computing device of Figure 1 for defining rules engine inputs and outputs for ruleset explanations, according to one example;
Figure 5 is a block diagram of the computing device of Figure 1 for defining rules engine inputs and outputs for ruleset explanations, according to one example;
Figure 6 is a block diagram of the computing device of Figure 1 for defining rules engine inputs and outputs for ruleset explanations, according to one example;
Figure 7 is a flowchart illustrating operations performed by the computing device of Figure 1 for defining rules engine inputs and outputs for ruleset explanations, according to one example;
Figure 8 is a block diagram of the computing device of Figure 1 for defining rules engine inputs and outputs for ruleset explanations, according to one example;
Figure 9 is a block diagram of a computing device suitable for implementing aspects illustrated in Figures 1-6 according to one example;
Figure 10 is a block diagram of the computing device of Figure 1 for defining rules engine inputs and outputs for ruleset explanations, according to one example;
Figure 11 is a block diagram of the computing device of Figure 1 for defining rules engine inputs and outputs for ruleset explanations, according to one example; and
Figure 12 is a block diagram of a computing device suitable for implementing examples, according to one example.

### DETAILED DESCRIPTION

The examples set forth below represent the information to enable individuals to practice the examples and illustrate the best mode of practicing the examples. Upon reading the following description in light of the accompanying drawing figures, individuals will understand the concepts of the disclosure and will recognize applications of these concepts not particularly addressed herein. It should be understood that these concepts and applications fall within the scope of the disclosure and the accompanying claims.

Any flowcharts discussed herein are necessarily discussed in some sequence for purposes of illustration, but unless otherwise explicitly indicated, the examples are not limited to any particular sequence of steps. The use herein of ordinals in conjunction with an element is solely for distinguishing what might otherwise be similar or identical labels, such as "first message" and "second message," and does not imply an initial occurrence, a quantity, a priority, a type, an importance, or other attribute, unless otherwise stated herein. The term "about" used herein in conjunction with a numeric value means any value that is within a range of ten percent greater than or ten percent less than the numeric value. As used herein and in the claims, the articles "a" and "an" in reference to an element refers to "one or more" of the elements unless otherwise explicitly specified. The word "or" as used herein and in the claims is inclusive unless contextually impossible. As an example, the recitation of A or B means A, or B, or both A and B. The word "data" may be used herein in the singular or plural depending on the context.

Explainable Artificial Intelligence (XAI) seeks to investigate complex systems and models, such as black-box models with innerworkings that are inaccessible or too complex to be interpreted. Explanations of such complex systems are necessary in order to comply with business ethics and various regulations that entitle users of automated decisions the right to an explanation of the decision-making process that led to the automated decision. Rules engines are systems that define the computational logic of complex systems with rules that define pieces of information or pieces of decision logic, such that the operational behavior of the system components can be changed by nondeveloper users. For example, a business rules engine is a composition of rules that businesses can define for a process the business wants to regulate, such as determining which customers qualify for a loan. Some rules engines may be white-box models, in that all decisions the rule engine makes can be easily understood by an understanding of all component rules, however, systems with a large number of rules or with complex rules can be too difficult to be easily or quickly understood. As rules engines become more complex, it is desirable to apply XAI techniques to the rules engine in order to comply with business ethics and various regulations and to be able to quickly understand the behavior of the system without detailed first-hand knowledge of the corpus of rules.

XAI techniques may be dependent on the system that is to be explained having the form of a function that receives a fixed input schema and returns a fixed output schema. However, rules engines do not have a similar requirement, therefore, in order to use XAI techniques to explain complex rules engines, a function that receives a fixed input schema and returns a fixed output schema is needed.

The examples disclosed herein implement defining rules engine inputs and outputs for ruleset explanations. In order to use XAI techniques to explain the ruleset behaviors of complex rules engines, an input-output interface can be extracted from the ruleset of the rules engine. For instance, modifiable inputs can be inserted into the rules engine, the output can be observed, input can be modified, the change in the output can be identified, and a model of how the rules engine works can be built so that an XAI algorithm can identify the changed input and how the output is affected. The inputs to a rules engine can be defined as the factors that are modifiable and induce change in the output, such as the settable attributes of input objects which exist within the rules engine before rules are evaluated. The output to the rules engine can be obtained and defined as the values created, modified, or deleted during the evaluation of the rules of the rules engine, such as the gettable attributes of the objects in the rules engine.

Input objects can be obtained, and the settable attributes of the input objects can be used as features. The input objects represent the initial state of the system and define how the system behaves at runtime. In order to extract settable attributes, the input objects can be recursively examined for settable attributes. The settable attributes may be attributes of the input objects that can be set with a value. The extracted settable attributes can then be stored in a data structure that can be accessed by a user or computing device and used with an XAI technique.

Rules engine outputs can be defined as the consequences or side effects of rule evaluation, which may be any value created, modified, or deleted during the evaluation of the rules that is also a gettable attribute. The gettable attributes may be attributes of an object that are defined by a value that is retrievable. The intermediate or final values of the changed values can be defined as outputs of the rules engine. In order to extract outputs as rules are evaluated, the objects within the rules engine can be recursively examined for gettable attributes and the values of the gettable attributes can be extracted before and after a rule evaluation. The extracted gettable attributes, values, and rules can then be stored in a data structure that can be accessed by a user or computing device.

The extracted inputs, which can be the settable attributes, and the extracted outputs, which can be the gettable attributes and objects created or deleted during ruleset evaluation, can be used with an XAI technique to determine how the input conditions of the system affected the various outcomes of the ruleset evaluation. A user or a computing device can filter the extracted inputs and outputs in order to provide the inputs and outputs that are of interest to be used with the XAI technique. For instance, an XAI algorithm can be used to determine how the filtered settable attributes that a user is interested in affect the output of the rules engine in order to explain the rules engine and ruleset. One example technique may be to use counterfactual algorithms to determine how to alter the initial conditions to produce desirable or different outcomes. For example, running an XAI algorithm with these defined inputs and outputs can determine how the settable attributes that a user is interested in affect the output of the rules engine, allowing for an explanation of the complex rules engine.

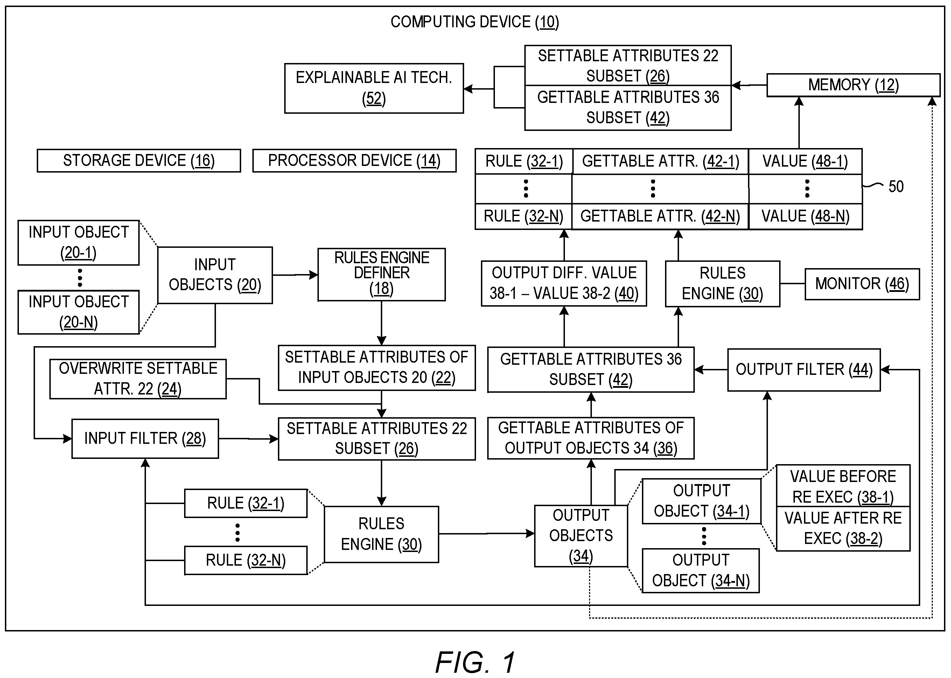

Figure 1 is a block diagram of a computing device 10 that comprises a system memory 12, a processor device 14, and a storage device 16 in which examples of defining rules engine inputs and outputs for ruleset explanations may be practiced. It is to be understood that the computing device 10 in some examples may include constituent elements in addition to those illustrated in Figure 1. In the example of Figure 1, the computing device 10 implements a rules engine definer 18 that performs defining rules engine inputs and outputs for ruleset explanations.

The rules engine definer 18 may obtain a plurality of input objects 20-1 - 20-N (collectively, input objects 20). The input objects 20 can represent an initial state before any rules of the rules engine are executed. In an implementation of a rules engine with an object-oriented programming language, such as Java or C#, as non-limiting examples, the input objects 20 may be objects or classes with attributes. For example, the rules engine may be for loan acceptance that processes customer data to determine whether the customer will be accepted for a loan, and the input objects 20 may include an applicant object that contains attributes such as applicant age, job title, and income, and a credit object that contains attributes such as credit score and amount of debt.

The rules engine definer 18 may determine settable attributes 22 of each input object of the input objects 20. The settable attributes 22 can include attributes of an input object of the input objects 20 that can be set with a value. In an implementation of a rules engine with the an object-oriented programming language, an attribute may be an attribute of a class, such as a variable, where the class is one of the input objects 20. For example, the rules engine may be for loan acceptance and the input objects 20 may include an applicant class with an attribute for applicant name that can be set with a value, such as a string, for the loan applicant's name, so applicant name is a settable attribute of the applicant class input object.

In some implementations, subsequent to determining the settable attributes 22 of the input objects 20, the rules engine definer 18 may overwrite 24 one or more of the settable attributes 22. For example, a settable attribute may be categorized as a numeric feature when the settable attribute should instead be a categorical feature due to a limited number of possible values, so the automatic-type inference can be overridden and valid value ranges can be specified for the settable attribute.

The rules engine definer 18 may create a subset of the settable attributes 22, settable attributes subset 26. The settable attributes subset 26 may be based on an input filter 28. The input filter 28 can include or exclude one or more rules of a rules engine 30, one or more field names of the input objects 20, and/or one or more of the input objects 20. In some implementations, the input filter 28 may comprise one or more user-configurable filters. The user-configurable filters may be configured by a user who chooses which rules, field names, input objects 20, or settable attributes 22, as non-limiting examples, to exclude from the settable attributes 22 to create the settable attributes subset 26. The rules engine definer 18 can use the input filter 28 configured by the user in order to create the settable attributes subset 26 by filtering out the criteria as specified by the user. For example, the rules engine may be for loan acceptance and the input objects 20 may include an applicant class with settable attributes for applicant name, applicant age, and applicant address, and a user may decide that the applicant age and the applicant address are not needed and configure the input filter 28 to exclude the applicant age and the applicant address from the settable attributes 22. The settable attributes subset 26 may then include the applicant name and not the applicant age and the applicant address when the rules engine definer 18 uses the input filter 28 configured by the user to create the settable attributes subset 26.

The rules engine definer 18 may insert the settable attributes subset 26 into the rules engine 30. The rules engine 30 may include a set of rules 32-1 - 32-N (collectively, rules 32) that are evaluated with an input and the rules engine 30 may produce an output during the execution of the rules engine 30. The rules engine 30 may then be executed. The execution of the rules engine 30 can include evaluating the ruleset (e.g., the rules 32) with an input and producing an output. During the execution of the rules engine 30, the rules engine definer 18 may determine a plurality of output objects 34-1 - 34-N (collectively, output objects 34) created during the execution of the rules engine 30 and gettable attributes 36 of each output object of the output objects 34. The gettable attributes 36 can include attributes of an output object of the output objects 34 that are defined by a value that can be retrieved. In an implementation of a rules engine with an object-oriented programming language, an attribute may be an attribute of a class where the class is one of the input objects 20. For example, the rules engine may be for loan acceptance and the input objects 20 may include an applicant class with an attribute for income and a credit class with an attribute for credit score. During the execution of the rules engine 30, the rules that calculate the probability of default may be fired (i.e., rules that use the income and credit score attributes of the input objects 20), resulting in an output object of a risk class with a gettable attribute for probability of default that can be defined by a retrievable value, such as a decimal, for the probability that the applicant will default on a loan.

In some implementations, during the execution of the rules engine 30, the rules engine definer 18 may store, such as in the system memory 12, each output object of the output objects 34 before the execution of the rules engine 30 is completed. For instance, the last rule within the rules engine 30 may be a rule to delete everything, including objects that were created. The rules engine definer 18 can store each output object of the output objects 34 during the execution of the rules engine 30 as the output object arises so that the output objects 34 are stored, such as in the system memory 12, and retrievable even if the output objects 34 are deleted at the end of the execution of the rules engine 30. Storing each output object of the output objects 34 before the execution of the rules engine 30 is completed can also include storing each of the gettable attributes 36 in the system memory 12 as the gettable attributes 36 are determined during the execution of the rules engine 30.

In some implementations, during the execution of the rules engine 30, the rules engine definer 18 may determine a first set of values 38-1 for each output object of the output objects 34 before a rule of the rules 32 is executed by the rules engine 30. The rules engine definer 18 may also determine a second set of values 38-2 for each output object of the output objects 34 after a rule of the rules 32 is executed by the rules engine 30. When the execution of the rules engine 30 is completed, the rules engine definer 18 may determine a difference 40 between a first value from the first set of values 38-1 and a second value from the second set of values 38-2. The first value and the second value may correspond to an output object of the output objects 34. The difference 40 between the first value and the second value may be identified as an output of the execution of the rules engine 30. The difference 40 may also be stored, such as in the system memory 12. In some implementations, when the first value from the first set of values 38-1 and the second value from the second set of values 38-2 are different, these changed values can be temporarily chained from initial to final value, with the rules engine definer 18 tracking all intermediary values taken on during the ruleset evaluation after the rules engine 30 executes and runs all of the rules 32, and all of these values can be reported as outputs.

The rules engine definer 18 may create a subset of the gettable attributes 36, gettable attributes subset 42. The gettable attributes subset 42 may be based on an output filter 44. The output filter 44 can include or exclude one or more of the rules 32 of the rules engine 30, one or more field names of the output objects 34, and/or one or more of the output objects 34. In some implementations, the output filter 44 may comprise one or more user-configurable filters. The user-configurable filters may be configured by a user who chooses which rules, field names, output objects 34, or gettable attributes 36, as non-limiting examples, to exclude from the gettable attributes 36 to create the gettable attributes subset 42. The rules engine definer 18 can use the output filter 44 configured by the user in order to create the gettable attributes subset 42 by filtering out the criteria as specified by the user. For example, the rules engine may be for loan acceptance and the output objects 34 may include a risk class with gettable attributes for probability of default, interest rate, and down payment required, and a user may decide that the interest rate and the down payment required are not needed and configure the output filter 33 to exclude the interest rate and the down payment required from the gettable attributes 36. The gettable attributes subset 42 may then include the probability of default and not the interest rate and the down payment required when the rules engine definer 18 uses the output filter 44 configured by the user to create the gettable attributes subset 42.

In some implementations, subsequent to creating the gettable attributes subset 42, the rules engine definer 18 may insert the gettable attributes subset 42 into the rules engine 30. A second execution of the rules engine 30 can begin and a monitor 46 in the rules engine 30 may determine whether a gettable attribute of the gettable attributes subset 42 is obtained during the second execution. As a result, a value of the gettable attribute may be recorded or stored as an output of the rules engine 30.

The extracted inputs (e.g., the settable attributes 22, the settable attributes subset 26) and the extracted outputs (e.g., the gettable attributes 36, the gettable attributes subset 42) can be used to create a functional model of the rules engine 30. The functional model can then be used with explainable artificial intelligence (XAI) techniques 52 to explain the rules engine 30 and the rule set (e.g., the rules 32). The rules engine definer 18 may store, in the system memory 12, the rules 32 and gettable attributes 42-1 - 42-N and values 48-1 - 48-N of the gettable attributes 42-1 - 42-N that correspond the rules 32. The gettable attributes 42-1 - 42-N can be gettable attributes from the gettable attributes subset 42. In some implementations, the rules engine definer 18 may create a data structure 50, such as a table, a graph, or a map, as non-limiting examples, that includes the rules 32 and the gettable attributes 42-1 - 42-N and the values 48-1 - 48-N of the gettable attributes 42-1 - 42-N that correspond to the rules 32. For example, the data structure 50 may be a table of rows with a column for the rule, a column for a gettable attribute of the rule, and a column for the value of the gettable attribute of the rule. One rule may have more than one gettable attribute, so multiple rows of the table may have the same rule identified with each row containing a different gettable attribute and value of the gettable attribute for the rule.

After storing the rules 32 and the gettable attributes 42-1 - 42-N and the values 48-1 - 48-N of the gettable attributes 42-1 - 42-N that correspond the rules 32 in the system memory 12, one or more of the XAI techniques 52 or algorithms may be applied to the rules engine 30 using inputs that correspond to the settable attributes subset 26 and the gettable attributes subset 42. Applying the XAI technique 52 can allow for compliance with business ethics and various regulations and allow users to be able to quickly understand the behavior of the rules engine 30 without detailed first-hand knowledge of the rules 32. For example, the XAI technique 52 may be to use counterfactual algorithms to determine how to alter the initial conditions to produce desirable or different outcomes with the rules engine 30. For example, the rules 32 may be a shipping cost calculation ruleset and a counterfactual explanation of the rules engine 30 can be produced to find the closest shipment to an original shipment with a constrained shipping budge and produce a total cost.

It is to be understood that, because the rules engine definer 18 is a component of the computing device 10, functionality implemented by the rules engine definer 18 may be attributed to the computing device 10 generally. Moreover, in examples where the rules engine definer 18 comprises software instructions that program the processor device 14 to carry out functionality discussed herein, functionality implemented by the rules engine definer 18 may be attributed herein to the processor device 14. It is to be further understood that while, for purposes of illustration only, the rules engine definer 18 is depicted as a single component, the functionality implemented by the rules engine definer 18 may be implemented in any number of components, and the examples discussed herein are not limited to any particular number of components.

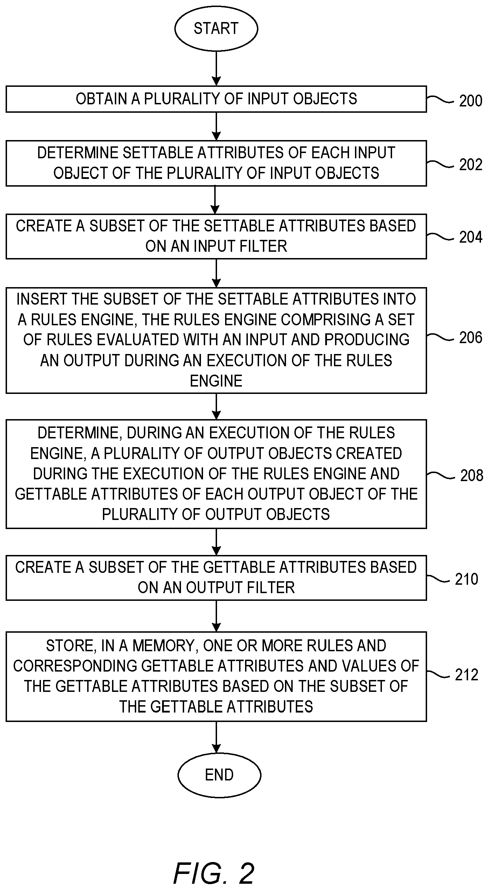

Figure 2 is a flowchart illustrating operations performed by the computing device of Figure 1 for defining rules engine inputs and outputs for ruleset explanations, according to one example. Elements of Figure 1 are referenced in describing Figure 2 for the sake of clarity. In Figure 2, operations begin with a processor device of a computing device, such as the processor device 14 of the computing device 10 of Figure 1, the processor device 14 to obtain a plurality of input objects (block 200). The processor device 14 further to determine settable attributes of each input object of the plurality of input objects (block 202). The processor device 14 further to create a subset of the settable attributes based on an input filter (block 204). The processor device 14 further to insert the subset of the settable attributes into a rules engine, the rules engine comprising a set of rules evaluated with an input and producing an output during an execution of the rules engine (block 206). The processor device 14 further to determine, during an execution of the rules engine, a plurality of output objects created during the execution of the rules engine and gettable attributes of each output object of the plurality of output objects (block 208). The processor device 14 further to create a subset of the gettable attributes based on an output filter (block 210). The processor device 14 further to store, in a memory, one or more rules and corresponding gettable attributes and values of the gettable attributes based on the subset of the gettable attributes (block 212).

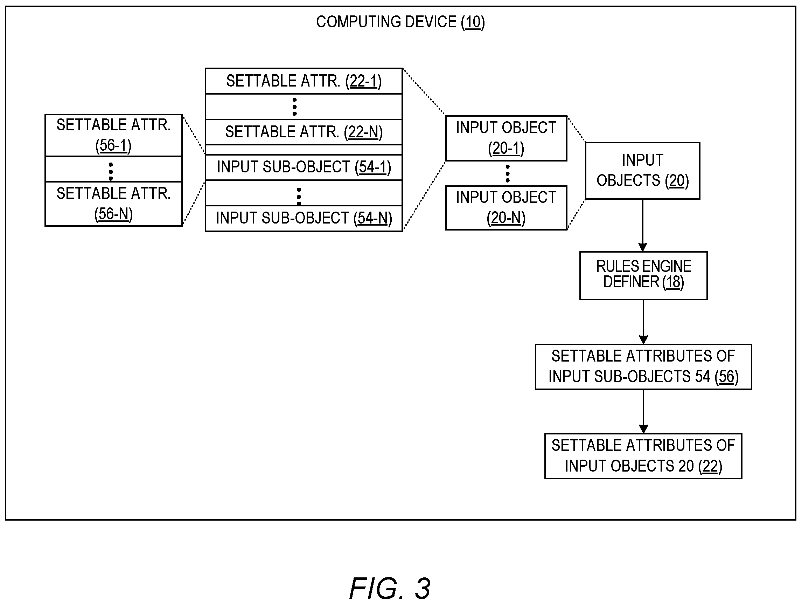

Figure 3 is a block diagram of the computing device of Figure 1 for defining rules engine inputs and outputs for ruleset explanations, according to one example. Elements of Figure 1 are referenced in describing Figure 3 for the sake of clarity. In the example of Figure 3, the rules engine definer 18 may determine the settable attributes 22 of the input objects 20 by using recursion. For each input object of the input objects 20, the rules engine definer 18 may identify settable attributes (i.e., attributes that can be set with a value) of the input object (e.g., the input object 20-1 may contain the settable attributes 22-1 - 22-N) or one or more input sub-objects 54-1 - 54-N (collectively, input sub-objects 54) of the input object (e.g., the input object 20-1). For each input sub-object of the input sub-objects 54, the rules engine definer 18 may identify settable attributes (i.e., attributes that can be set with a value) of the input sub-object (e.g., the input sub-object 54-1 may contain settable attributes 56-1 - 56-N). An input sub-object may also have a sub-object and the rules engine definer 18 can continue to identify settable attributes or further sub-objects of each sub-object until no more sub-objects remain (i.e., the last sub-object only has settable attributes and no further sub-objects). All settable attributes 56 of the input sub-objects 54 that were identified can then be included in the settable attributes 22 of the input objects 20.

For example, the rules engine 30 may be for loan acceptance and the input objects 20 may include an applicant class with the settable attributes 22 of applicant name, applicant age, and applicant address, and input sub-objects 54 that include an employment class and a financials class. Each of the input sub-objects 54 may include the settable attributes 56 and/or further sub-objects. The employment class may include the settable attributes 56 of job title and length of employment, and the financials class may include the settable attributes 56 of income and number of financial accounts and sub-objects that include a bank accounts class and a retirement accounts class, and each of these sub-objects may include settable attributes and/or further sub-objects.

For the input object of the applicant class, the rules engine definer 18 may identify the settable attributes of applicant name, applicant age, and applicant address and the input sub-objects of the employment class and the financials class. For each sub-object of the applicant class, the rules engine definer 18 can then identify the settable attributes and the further sub-objects. For the sub-object of the employment class, the rules engine definer 18 may identify the settable attributes of job title and length of employment, and because there are no further sub-objects in the employment class, the rules engine definer 18 can move onto the next sub-object of the input object. For the sub-object of the financials class, the rules engine definer 18 may identify the settable attributes of income and number of financial accounts, and identify the further sub-objects of the bank accounts class and the retirement accounts class. Because there are further sub-objects in the financials class, the rules engine definer 18 can continue and identify the settable attributes and sub-objects of the sub-objects in the financials class. For the sub-object of the bank accounts class, the rules engine definer 18 can identify the settable attributes and any further sub-objects. If there are settable attributes and no further sub-objects in the bank accounts class, then the rules engine definer 18 can identify the settable attributes and move onto the next sub-object. If there are settable attributes and further sub-objects in the bank accounts class, then the rules engine definer 18 can continue identifying settable attributes in the sub-objects until there are no further sub-objects. For the sub-object of the retirement accounts class, the rules engine definer 18 can identify the settable attributes and any further sub-objects. If there are settable attributes and further sub-objects in the retirement accounts class, then the rules engine definer 18 can continue identifying settable attributes in the sub-objects until there are no further sub-objects. If there are settable attributes and no further sub-objects in the retirement accounts class, then the rules engine definer 18 can identify the settable attributes and the rules engine definer 18 can move onto the next input sub-object of the input sub-objects 54 if there are further input sub-objects, or the next input object of the input objects 20.

All settable attributes 56 of all of the input sub-objects 54 that were identified can then be included in the settable attributes 22 of the input objects 20. The settable attributes 22 can include the applicant name, applicant age, and applicant address from the applicant class input object. The settable attributes 56 can include the job title, length of employment, income, number of financial accounts, and the settable attributes from all of the sub-objects of the applicant class input object. The settable attributes 56 can be included in the settable attributes 22 so that the settable attributes 22 includes the applicant name, applicant age, applicant address, job title, length of employment, income, number of financial accounts, and settable attributes from all of the input objects 20, input sub-objects 54, and further sub-objects of the input sub-objects 54 in this example.

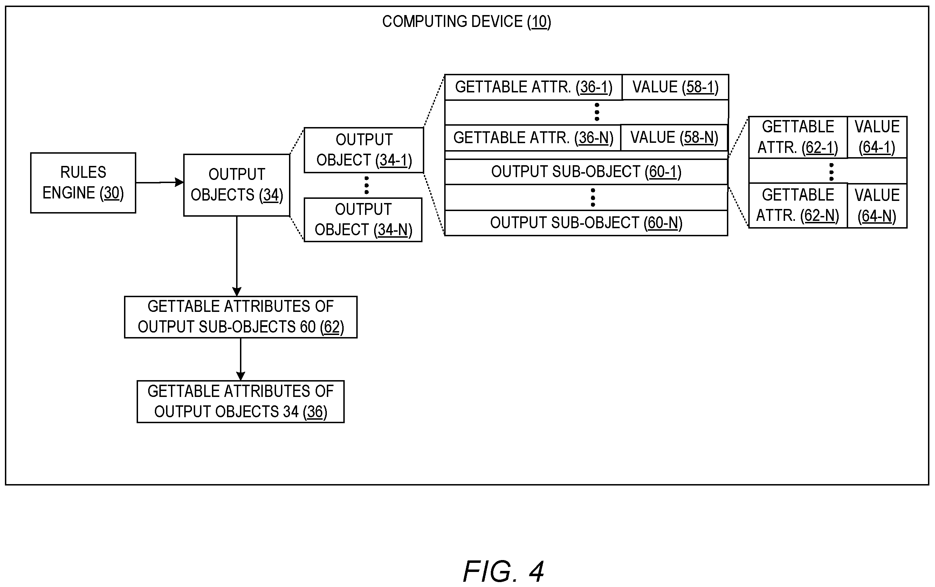

Figure 4 is a block diagram of the computing device of Figure 1 for defining rules engine inputs and outputs for ruleset explanations, according to one example. Elements of Figure 1 are referenced in describing Figure 4 for the sake of clarity. In the example of Figure 4, during the execution of the rules engine 30, the rules engine definer 18 may determine the output objects 34 that are created during the execution of the rules engine 30 and the gettable attributes 36 of the output objects 34 by using recursion. For each output object of the output objects 34, the rules engine definer 18 may identify gettable attributes (i.e., attributes that are defined by a value that can be retrieved) of the output object (e.g., the output object 34-1 may contain the gettable attributes 36-1 - 36-N defined by retrievable values 58-1 - 58-N, respectively) or one or more output sub-objects 60-1 - 60-N (collectively, output sub-objects 60) of the output object (e.g., the output object 34-1). For each output sub-object of the output sub-objects 60, the rules engine definer 18 may identify gettable attributes (i.e., attributes that are defined by a value that can be retrieved) of the output sub-object (e.g., the output sub-object 60-1 may contain gettable attributes 62-1 - 62-N defined by retrievable values 64-1 - 64-N, respectively). An output sub-object may also have a sub-object and the rules engine definer 18 can continue to identify gettable attributes or further sub-objects of each sub-object until no more sub-objects remain (i.e., the last sub-object only has settable attributes and no further sub-objects). All gettable attributes 62 of the output sub-objects 60 that were identified can then be included in the gettable attributes 36 of the output objects 34.

For example, the rules engine definer 18 may be for loan acceptance and the output objects 34 may include a risk class with the gettable attributes 36 of probability of default, interest rate, and down payment required, the values 58 for the gettable attributes 36, and output sub-objects 60 that include a financials class. Each of the output sub-objects may include the gettable attributes 62 and/or further sub-objects. The financials class may include the gettable attributes 62 of number of accounts and total accounts balance, along with the values 64 for these gettable attributes 62, and a sub-object that includes a bank account class and a retirement accounts class, and each of these sub-objects may include gettable attributes and values and/or further sub-objects.

For the output object of the risk class, the rules engine definer 18 may identify the gettable attributes of probability of default, interest rate, and down payment required, along with the values of these gettable attributes, and the output sub-object of the financial class. For each sub-object of the risk class, the rules engine definer 18 can then identify the gettable attributes, values, and further sub-objects. For the sub-object of the financials class, the rules engine definer 18 may identify the gettable attributes of number of accounts and total accounts balance, along with the values of these gettable attributes, and identify the further sub-objects of the bank accounts class and the retirement accounts class. Because there are further sub-objects in the financials class, the rules engine definer 18 can continue and identify the gettable attributes and sub-objects of the sub-objects in the financials class. For the sub-object of the bank accounts class, the rules engine definer 18 can identify the gettable attributes, values, and any further sub-objects. If there are gettable attributes and no further sub-objects in the bank accounts class, then the rules engine definer 18 can identify the gettable attributes and move onto the next sub-object. If there are gettable attributes and further sub-objects in the bank accounts class, then the rules engine definer 18 can continue identifying gettable attributes in the sub-objects until there are no further sub-objects. For the sub-object of the retirement accounts class, the rules engine definer 18 can identify the gettable attributes, the values, and further sub-objects. If there are gettable attributes and further sub-objects in the retirement accounts class, then the rules engine definer 18 can continue identifying gettable attributes in the sub-objects until there are no further sub-objects. If there are gettable attributes and no further sub-objects in the retirement accounts class, then the rules engine definer 18 can identify the gettable attributes and the rules engine definer 18 can move onto the next output sub-object of the output sub-objects 60 if there are further output sub-objects, or the next output object of the output objects 34.

All gettable attributes 62 of all of the output sub-objects 60 that were identified can then be included in the gettable attributes 36 of the output objects 34. The gettable attributes 36 can include the probability of default, interest rate, and down payment required from the risk class output object. The gettable attributes 62 can include the number of accounts, total accounts balance, and the gettable attributes from all of the sub-objects of the risk class output object. The gettable attributes 62 can be included in the gettable attributes 36 so that the gettable attributes 36 include the probability of default, interest rate, down payment required, number of accounts, total accounts balance, and gettable attributes from all of the output objects 34, output sub-objects 60, and further sub-objects of the output sub-objects 60 in this example.

In some examples, the rules engine definer 18 may identify gettable attributes of the output object by identifying values of the output object that were created, modified, or deleted during the execution of the rules engine 30. For instance, at least some of the values 58-1 - 58-N of at least some of the gettable attributes 36 of the output objects 34 may include the values of the output object (e.g., the output object 34-1) that were identified as being created, modified, or deleted during the execution of the rules engine 30.

In some examples, the rules engine definer 18 may identify gettable attributes of the output sub-object by identifying values of the output sub-object that were created, modified, or deleted during the execution of the rules engine 30. For instance, at least some of the values 64-1 - 64-N of at least some of the gettable attributes 62 of the output sub-objects 60 may include the values of the output sub-object (e.g., the output subj-object 60-1) that were identified as being created, modified, or deleted during the execution of the rules engine 30.

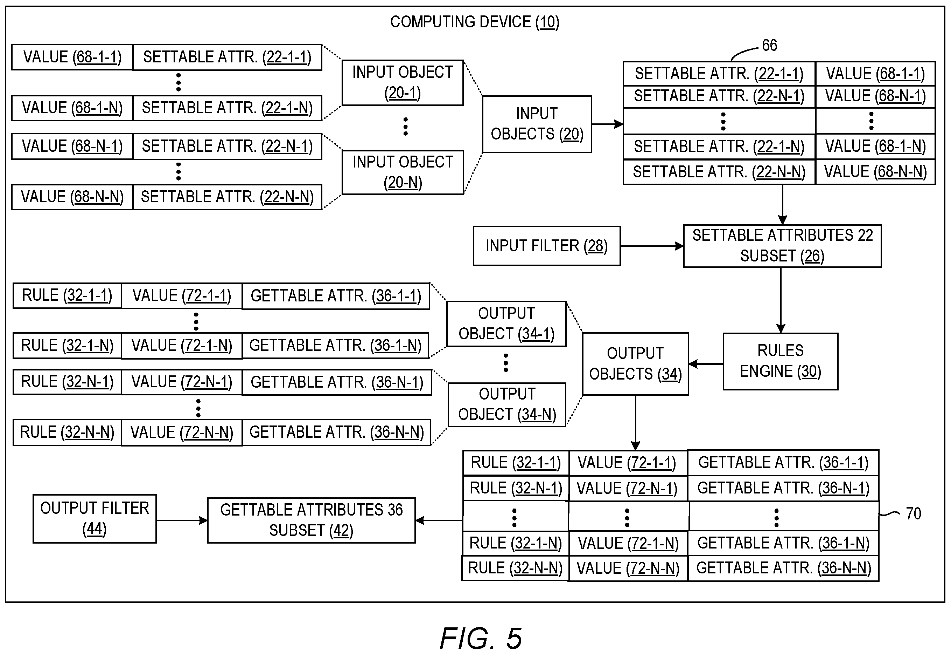

Figure 5 is a block diagram of the computing device of Figure 1 for defining rules engine inputs and outputs for ruleset explanations, according to one example. Elements of Figure 1 are referenced in describing Figure 5 for the sake of clarity. In the example of Figure 5, the rules engine definer 18 may create the settable attributes subset 26 based on the input filter 28 by creating a data structure 66, such as a table, a graph, or a map, as non-limiting examples, that includes the settable attributes 22 (e.g., settable attributes 22-1-1 - 22-1-N - settable attributes 22-N-1 - 22-N-N) of each input object of the input objects 20 and values (e.g., values 68-1-1 - 68-1-N and values 68-N-1 - 68-N-N) corresponding to each of the settable attributes 22. For example, the data structure 66 may be a table of rows with a column for the settable attribute and a column for the value of the settable attribute. The rules engine definer 18 may obtain the input filter 28 and, based on the input filter 28, determine the settable attributes subset 26. For instance, the rules engine definer 18 can access the data structure 66 and the input filter 28 and apply the criteria of the input filter 28 to the data structure 66 to pull the settable attributes and corresponding values to include in the settable attributes subset 26. As a result, the settable attributes subset 26 may include settable attributes that are in the data structure 66 and that meet the criteria of the input filter 28. The data structure 66 can also be stored, such as in the system memory 12, for access by a user or computing device.

The input filter 28 can include or exclude one or more rules of the rules engine 30, one or more field names of the input objects 20, and/or one or more of the input objects 20. In some implementations, the input filter 28 may comprise one or more user-configurable filters. The user-configurable filters may be configured by a user who chooses which rules, field names, input objects 20, or settable attributes 22, as non-limiting examples, to exclude from the settable attributes 22 to create the settable attributes subset 26. The user may configure the input filter 28 by accessing the data structure 66 and choosing the settable attributes 22 to be included for the rules engine 30 execution. In other implementations, the user may access the data structure 66 and choose the settable attributes 22 to be included for the rules engine 30 execution, and the rules engine definer 18 may determine the settable attributes subset 26 based on the user configuration instead of the input filter 28.

The rules engine definer 18 may create the gettable attributes subset 42 based on the output filter 44 by creating a data structure 70, such as a table, a graph, or a map, as non-limiting examples, that includes the gettable attributes 36 (e.g., gettable attributes 36-1-1 - 36-1-N - gettable attributes 36-N-1 - 36-N-N) of each output object of the output objects 34 and values (e.g., values 72-1-1 - 72-1-N and values 72-N-1 - 72-N-N) corresponding to each of the gettable attributes 36 and rules (e.g., rules 32-1-1 - 32-1-N - rules 32-N-1 - 32-N-N) that correspond to each of the gettable attributes 36. For example, the data structure 70 may be a table of rows with a column for the rule, a column for the gettable attribute of the rule, and a column for the value of the gettable attribute of the rule. In some examples, the data structure 70 may be a table of rows with a column for the gettable attributes and a column for the values of the gettable attributes. The data structure 70 may be in temporal order in some implementations. The rules engine definer 18 may obtain the output filter 44 and, based on the output filter 44, determine the gettable attributes subset 42. For instance, the rules engine definer 18 can access the data structure 70 and the output filter 44 and apply the criteria of the output filter 44 to the data structure 70 to pull the gettable attributes and corresponding rules and values to include in the gettable attributes subset 42. As a result, the gettable attributes subset 42 may include gettable attributes that are in the data structure 70 and that meet the criteria of the output filter 44. The data structure 70 can also be stored, such as in the system memory 12, for access by a user or computing device.

The output filter 44 can include or exclude one or more of the rules 32 of the rules engine 30, one or more field names of the output objects 34, and/or one or more of the output objects 34. In some implementations, the output filter 44 may comprise one or more user-configurable filters. The user-configurable filters may be configured by a user who chooses which rules, field names, output objects 34, or gettable attributes 36, as non-limiting examples, to exclude from the gettable attributes 36 to create the gettable attributes subset 42. The user may configure the output filter 44 by accessing the data structure 70 and choosing the gettable attributes 36 to be included as outputs of the rules engine 30 (e.g., for use with the XAI techniques 52). The user may configure the output filter 44 by accessing the data structure 70 and choosing the gettable attributes 36 to be included as output based on the rules 32 and/or values 72 identified in the data structure 70. In other implementations, the user may access the data structure 70 and choose the gettable attributes 36 to be included as outputs, and the rules engine definer 18 may determine the gettable attributes subset 42 based on the user configuration instead of the output filter 44.

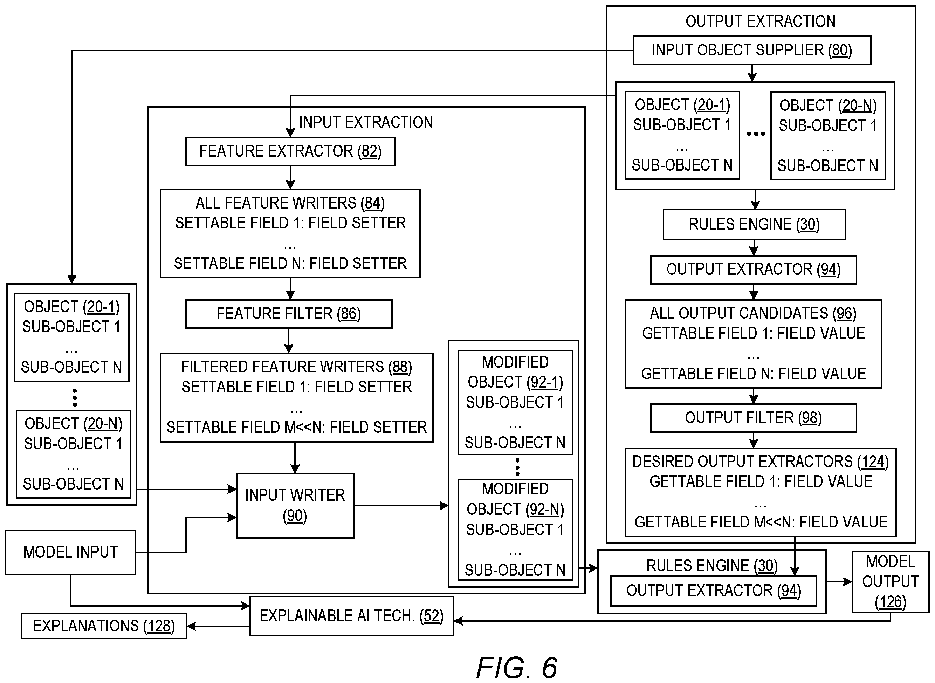

Figure 6 is a block diagram of the computing device of Figure 1 for defining rules engine inputs and outputs for ruleset explanations, according to one example. Elements of Figure 1 are referenced in describing Figure 6 for the sake of clarity. In the example of Figure 6, the input object supplier 80 may include a list of objects that are to be inserted into the rules engine 30, such as the input objects 20-1 - 20-N. A feature extractor 82 can extract inputs from the list of input objects supplied by the input object supplier 80. The inputs extracted by the feature extractor 82 may be the settable attributes of the input objects 20-1 - 20-N and the settable attributes of any sub-objects of the input objects. Feature writers 84 can overwrite existing values to new values, such as when the input object supplier 80 supplies an example set of inputs. A feature filter 86 can then be used to filter out the feature writers 84 that are not needed, resulting in filtered feature writers 88. For example, a user can use the feature filter 86 to filter out or remove the settable attributes that are not desired as inputs. In some implementations, the settable attributes can be presented to a user as a data structure, such as a table, for the user to filter out undesired inputs. An input writer 90 can create inputs based on the filtered feature writers 88, such as the modified objects 92-1 - 92-N, and these inputs can be the defined inputs to the rules engine 30. An output extractor 94 can extract outputs generated during an execution of the rules engine 30 using the input objects 20-1 - 20-N supplied by the input object supplier 80. The outputs extracted by the output extractor 94 may be the gettable attributes of the input objects and the objects created during the execution of the rules engine 30. The gettable attributes can be included in output candidates 96 and an output filter 98 can filter out the output candidates 96 that are not needed, resulting in desired output extractors 124. For example, a user can use the output filter 98 to filter out or remove the gettable attributes that are not desired as outputs. In some implementations, the gettable attributes can be presented to a user as a data structure, such as a table, for the user to filter out undesired candidate outputs. The output extractor 94 may be a monitor within the rules engine 30 that identifies the output so that when the rules engine 30 is executed a subsequent time, the output extractor 94 looks for the identified output to be created and takes the value of the created output as an output of the rules engine 30. The output of the rules engine 30 can be a model output 126 that can be used by XAI techniques 52 to provide explanations 128 of the rules engine 30. In some implementations, the input extraction and the output extraction may run in parallel with each other at the same time.

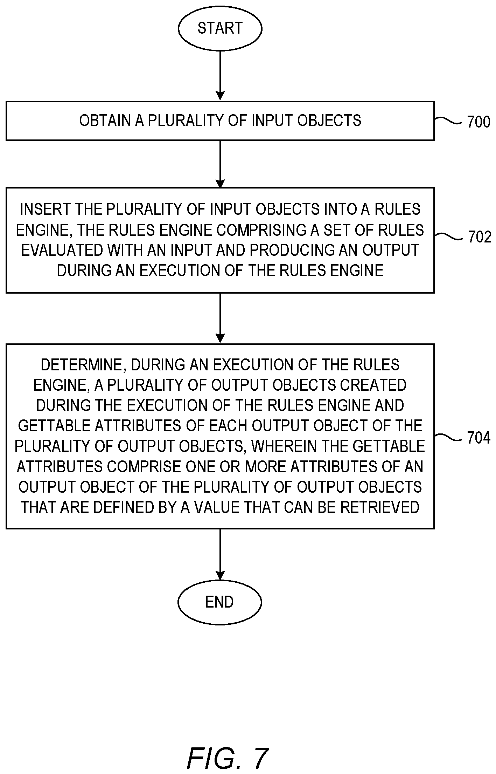

Figure 7 is a flowchart illustrating operations performed by the computing device of Figure 1 for defining rules engine inputs and outputs for ruleset explanations, according to one example. Elements of Figure 1 are referenced in describing Figure 7 for the sake of clarity. In Figure 7, operations begin with a processor device of a computing device, such as the processor device 14 of the computing device 10 of Figure 1, the processor device 14 to obtain a plurality of input objects (block 700). The processor device 14 further to insert the plurality of input objects into a rules engine, the rules engine comprising a set of rules evaluated with an input and producing an output during an execution of the rules engine (block 702). The processor device 14 further to determine, during an execution of the rules engine, a plurality of output objects created during the execution of the rules engine and gettable attributes of each output object of the plurality of output objects, wherein the gettable attributes comprise one or more attributes of an output object of the plurality of output objects that are defined by a value that can be retrieved (block 704).

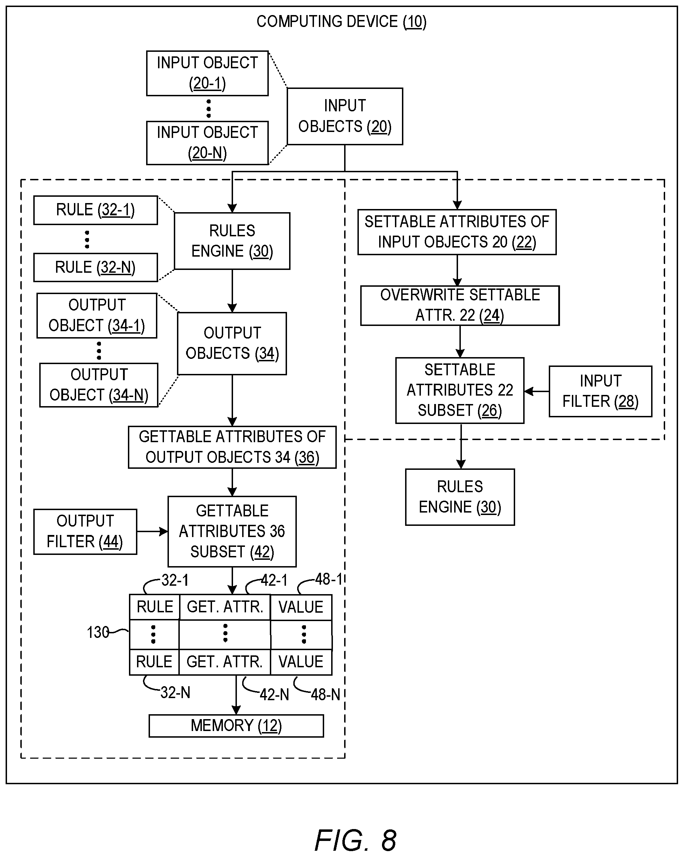

Figure 8 is a block diagram of the computing device of Figure 1 for defining rules engine inputs and outputs for ruleset explanations, according to one example. Elements of Figure 1 are referenced in describing Figure 8 for the sake of clarity. In the example of Figure 8, the rules engine definer 18 may obtain the input objects 20 and insert the input objects 20 into the rules engine 30. During an execution of the rules engine 30, the rules engine definer 18 may determine the output objects 34 created during the execution of the rules engine 30 and the gettable attributes 36 of each output object of the output objects 34. Each output object may be stored, such as in the system memory 12, as the output object arises prior to the completion of the execution of the rules engine 30. The gettable attributes 36 may be determined recursively, where gettable attributes are obtained from each output object and from each sub-object nested in each output object, as described in Figure 4. The rules engine definer 18 may create the gettable attributes subset 42 based on the output filter 44. In some implementations, the rules engine definer 18 may create the gettable attributes subset 42 by creating a data structure that includes the gettable attributes 36 of each output object and values corresponding to each of the gettable attributes 36 and rules (e.g., the rules 32-1 - 32-N) that correspond to each of the gettable attributes 36 and, based on the output filter 44 criteria, determine the gettable attributes subset 42 from the data structure. When the execution of the rules engine 30 is completed, the rules engine definer 18 may determine a difference between a first value from the first set of values and a second value from the second set of values, where the first value and the second value may correspond to an output object, and the difference may also be identified as an output of the execution of the rules engine 30. The rules engine definer 18 may create a data structure 130, such as a table, a graph, or a map, as non-limiting examples, that includes the rules 32, the gettable attributes 42-1 - 42-N, and the values 48-1 - 48-N of the gettable attributes 42-1 - 42-N that correspond the rules 32, and store the data structure 130 in the system memory 12.

Parallel to inserting the input objects 20 into the rules engine 30 and determining the output objects 34, the rules engine definer 18 may determine the settable attributes 22 of each input object of the input objects 20 and create the settable attributes subset 26 based on the input filter 28. The settable attributes 22 may be determined recursively, where settable attributes are obtained from each input object and from each sub-object nested in each input object, as described in Figure 3. In some implementations, after determining the settable attributes 22 of the input objects 20, the rules engine definer 18 may overwrite 24 one or more of the settable attributes 22. In some implementations, the rules engine definer 18 may create the settable attributes subset 26 by creating a data structure that includes the settable attributes 22 of each input object and values corresponding to each of the settable attributes 22 and, based on the input filter 28 criteria, determine the settable attributes subset 26 from the data structure. The settable attributes subset 26 can then be inserted into the rules engine 30. After the gettable attributes subset 42 and the settable attributes subset 26 are determined in the parallel execution, an XAI technique 52 may be applied to the rules engine 30 using inputs that correspond to the settable attributes subset 26 and the gettable attributes subset 42.

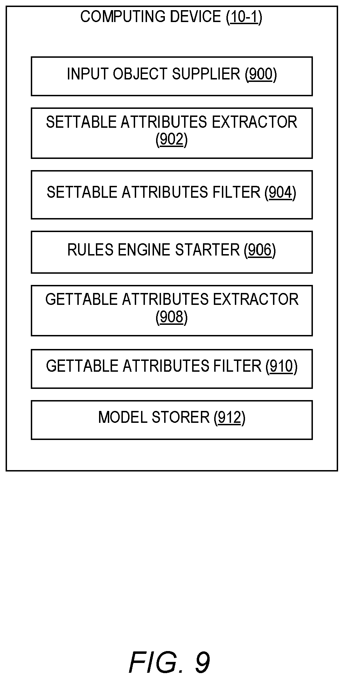

Figure 9 is a block diagram of a computing device 10-1 suitable for implementing aspects illustrated in Figures 1-6 according to one example. The computing device 10-1 implements identical functionality as that described above with regard to the computing device 10. The computing device 10-1 includes an input object supplier 900 to obtain a plurality of input objects. The input object supplier 900 may comprise executable software instructions configured to program a processor device to implement the functionality of obtaining a plurality of input objects, may comprise circuitry including, by way of non-limiting example, an application-specific integrated circuit (ASIC), field-programmable gate array (FPGA), or may comprise a combination of executable software instructions and circuitry.

The computing device 10-1 also includes a settable attributes extractor 902 to determine settable attributes of each input object of the plurality of input objects. In some implementations, the settable attributes extractor 902 determines settable attributes of each input object of the plurality of input objects by identifying attributes of the input object that can be set with a value or one or more sub-objects of the input object for each input object of the plurality of input objects, and identifying attributes of a sub-object that can be set with a value for each sub-object of the one or more sub-objects of the input object. The settable attributes extractor 902 may comprise executable software instructions configured to program a processor device to implement the functionality of determining settable attributes of each input object of the plurality of input objects, may comprise circuitry including, by way of non-limiting example, an ASIC, FPGA, or may comprise a combination of executable software instructions and circuitry.

The computing device 10-1 also includes a settable attributes filter 904 to create a subset of the settable attributes based on an input filter. In some implementations, the settable attributes filter 904 creates a subset of the settable attributes based on an input filter by creating a data structure comprising the settable attributes of each input object of the plurality of input objects and values corresponding to the settable attributes, obtaining the input filter, and determining, based on the input filter, the subset of the settable attributes, the subset of the settable attributes including settable attributes in the data structure that meet criteria of the input filter. The settable attribute filter 904 may comprise executable software instructions configured to program a processor device to implement the functionality of creating a subset of the settable attributes based on an input filter, may comprise circuitry including, by way of non-limiting example, an ASIC, FPGA, or may comprise a combination of executable software instructions and circuitry.

The computing device 10-1 also includes a rules engine starter 906 to insert the subset of the settable attributes into a rules engine, the rules engine comprising a set of rules evaluated with an input and producing an output during an execution of the rules engine. The rules engine starter 906 may comprise executable software instructions configured to program a processor device to implement the functionality of inserting the subset of the settable attributes into a rules engine, the rules engine comprising a set of rules evaluated with an input and producing an output during an execution of the rules engine, may comprise circuitry including, by way of non-limiting example, an ASIC, FPGA, or may comprise a combination of executable software instructions and circuitry.

The computing device 10-1 also includes a gettable attributes extractor 908 to determine, during an execution of the rules engine, a plurality of output objects created during the execution of the rules engine and gettable attributes of each output object of the plurality of output objects. In some implementations, the gettable attributes extractor 908 may determine, during an execution of the rules engine, a plurality of output objects created during the execution of the rules engine and gettable attributes of each output object of the plurality of output objects by identifying attributes of the output object that are defined by a value that can be retrieved or one or more sub-objects of the output object for each output object of the plurality of output objects, and identifying attributes of a sub-object that are defined by a value that can be retrieved for each sub-object of the one or more sub-objects of the output object. The gettable attributes extractor 908 may comprise executable software instructions configured to program a processor device to implement the functionality of determining, during an execution of the rules engine, a plurality of output objects created during the execution of the rules engine and gettable attributes of each output object of the plurality of output objects, may comprise circuitry including, by way of non-limiting example, an ASIC, FPGA, or may comprise a combination of executable software instructions and circuitry.

The computing device 10-1 also includes a gettable attributes filter 910 to create a subset of the gettable attributes based on an output filter. In some implementations, the gettable attributes filter 910 creates a subset of the gettable attributes based on an output filter by creating a data structure comprising the gettable attributes of each output object of the plurality of output objects, values corresponding to the gettable attributes, and rules corresponding to the gettable attributes, obtaining the output filter, and determining, based on the output filter, the subset of gettable attributes, the subset of gettable attributes including gettable attributes in the data structure that meet criteria of the output filter. The gettable attributes filter 910 may comprise executable software instructions configured to program a processor device to implement the functionality of creating a subset of the gettable attributes based on an output filter, may comprise circuitry including, by way of non-limiting example, an ASIC, FPGA, or may comprise a combination of executable software instructions and circuitry.

The computing device 10-1 also includes a model storer 912 to store, in a memory, one or more rules and corresponding gettable attributes and values of the gettable attributes based on the subset of the gettable attributes. In some implementations, the model storer 912 stores in a memory, one or more rules and corresponding gettable attributes and values of the gettable attributes based on the subset of the gettable attributes by creating a data structure comprising one or more rules, each rule corresponding to a gettable attribute from among the subset of the gettable attributes and a value of the gettable attribute, wherein the data structure comprises a table, a graph, or a map. The model storer 912 may comprise executable software instructions configured to program a processor device to implement the functionality of storing, in a memory, one or more rules and corresponding gettable attributes and values of the gettable attributes based on the subset of the gettable attributes, may comprise circuitry including, by way of non-limiting example, an ASIC, FPGA, or may comprise a combination of executable software instructions and circuitry.

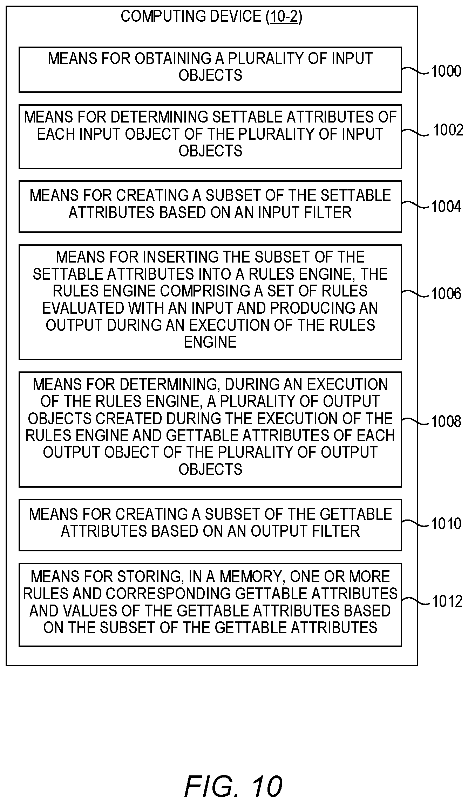

Figure 10 is a block diagram of a computing device 10-2 according to additional implementations. The computing device 10-2 implements identical functionality as that described above with regard to the computing device 10. In this implementation, the computing device 10-2 includes a means 1000 for obtaining a plurality of input objects. The means 1000 may be implemented in any number of manners, including, for example via the input object supplier 900 illustrated in Figure 9.

The computing device 10-2 also includes a means 1002 for determining settable attributes of each input object of the plurality of input objects. The means 1002 may, in some implementations, identify attributes of the input object that can be set with a value or one or more sub-objects of the input object for each input object of the plurality of input objects, and identify attributes of a sub-object that can be set with a value for each sub-object of the one or more sub-objects of the input object. The means 1002 may be implemented in any number of manners, including, for example via the settable attributes extractor 902 illustrated in Figure 9.

The computing device 10-2 also includes a means 1004 for creating a subset of the settable attributes based on an input filter a subset of the settable attributes based on an input filter. The means 1004 may, in some implementations, create a data structure comprising the settable attributes of each input object of the plurality of input objects and values corresponding to the settable attributes, obtain the input filter, and determine, based on the input filter, the subset of the settable attributes, the subset of the settable attributes including settable attributes in the data structure that meet criteria of the input filter. The means 1004 may be implemented in any number of manners, including, for example via the settable attributes filter 904 illustrated in Figure 9.

The computing device 10-2 also includes a means 1006 for inserting the subset of the settable attributes into a rules engine, the rules engine comprising a set of rules evaluated with an input and producing an output during an execution of the rules engine. The means 1006 may be implemented in any number of manners, including, for example via the rules engine starter 906 illustrated in Figure 9.

The computing device 10-2 also includes a means 1008 for determining, during an execution of the rules engine, a plurality of output objects created during the execution of the rules engine and gettable attributes of each output object of the plurality of output objects. The means 1008 may, in some implementations, identify attributes of the output object that are defined by a value that can be retrieved or one or more sub-objects of the output object for each output object of the plurality of output objects, and identify attributes of a sub-object that are defined by a value that can be retrieved for each sub-object of the one or more sub-objects of the output object. The means 1008 may be implemented in any number of manners, including, for example via the gettable attributes extractor 908 illustrated in Figure 9.

The computing device 10-2 also includes a means 1010 for creating a subset of the gettable attributes based on an output filter. The means 1010 may, in some implementations, create a data structure comprising the gettable attributes of each output object of the plurality of output objects, values corresponding to the gettable attributes, and rules corresponding to the gettable attributes, obtain the output filter, and determine, based on the output filter, the subset of gettable attributes, the subset of gettable attributes including gettable attributes in the data structure that meet criteria of the output filter. The means 1010 may be implemented in any number of manners, including, for example via the gettable attributes filter 910 illustrated in Figure 9.

The computing device 10-2 also includes a means 1012 storing, in a memory, one or more rules and corresponding gettable attributes and values of the gettable attributes based on the subset of the gettable attributes. The means 1012 may, in some implementations, create a data structure comprising one or more rules, each rule corresponding to a gettable attribute from among the subset of the gettable attributes and a value of the gettable attribute, wherein the data structure comprises a table, a graph, or a map. The means 1012 may be implemented in any number of manners, including, for example via the model storer 912 illustrated in Figure 9.

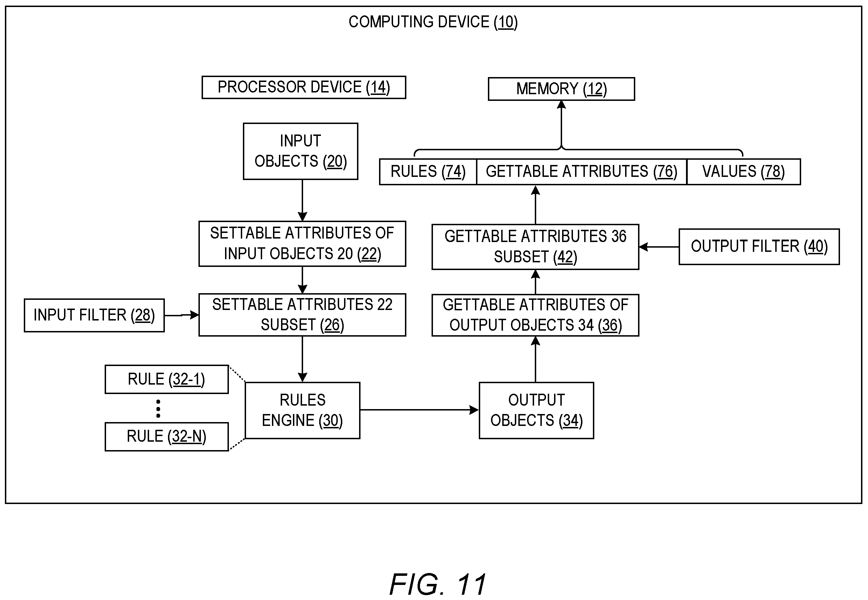

Figure 11 is a block diagram of the computing device of Figure 1 for defining rules engine inputs and outputs for ruleset explanations, according to one example. Elements of Figure 1 are referenced in describing Figure 11 for the sake of clarity. In the example of Figure 11, the computing device 10 includes a system memory 12 and a processor device 14 coupled to the system memory 12. The processor device 14 is to obtain a plurality of input objects 20. The processor device 14 is further to determine settable attributes 22 of each input object of the plurality of input objects 20. The processor device 14 is further to create a subset 26 of the settable attributes 22 based on an input filter 28. The processor device 14 is further to insert the subset 26 of the settable attributes 22 into a rules engine 30, the rules engine 30 comprising a set of rules 32 evaluated with an input and producing an output during an execution of the rules engine 30. The processor device 14 is further to determine, during an execution of the rules engine 30, a plurality of output objects 34 created during the execution of the rules engine 30 and gettable attributes 36 of each output object of the plurality of output objects 34. The processor device 14 is further to create a subset 42 of the gettable attributes 36 based on an output filter 44. The processor device 14 is further to store, in the memory 12, one or more rules 74 and corresponding gettable attributes 76 and values 78 of the gettable attributes 76 based on the subset 42 of the gettable attributes 36.

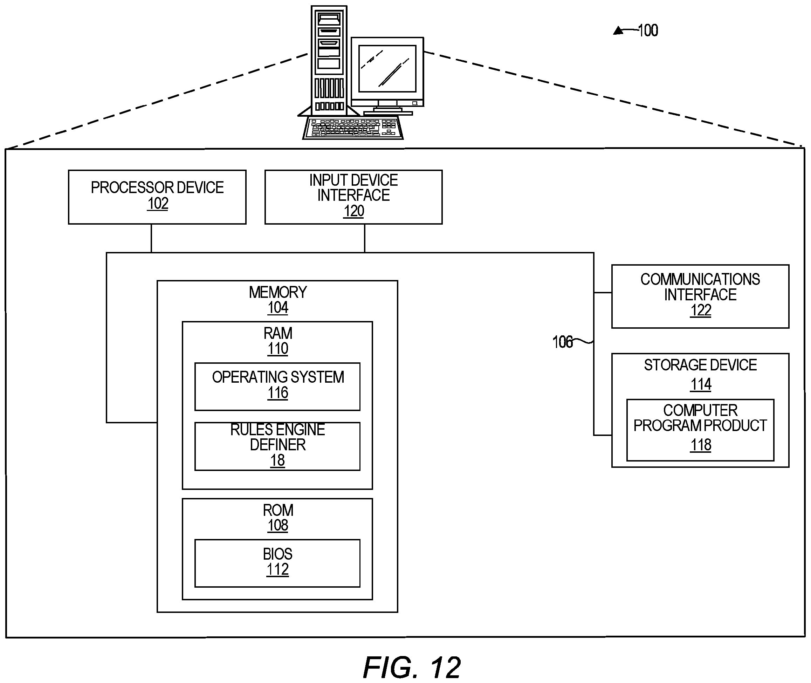

Figure 12 is a block diagram of a computing device 100, such as the computing device 10 of Figure 1, suitable for implementing examples according to one example. The computing device 100 may comprise any computing or electronic device capable of including firmware, hardware, and/or executing software instructions to implement the functionality described herein. The computing device 100 includes a processor device 102, such as the processor device 14, a system memory, 104, such as the system memory 12, and a system bus 106. The system bus 106 provides an interface for system components including, but not limited to, the system memory 104 and the processor device 102. The processor device 102 can be any commercially available or proprietary processor.

The system bus 106 may be any of several types of bus structures that may further interconnect to a memory bus (with or without a memory controller), a peripheral bus, and/or a local bus using any of a variety of commercially available bus architectures. The system memory 104 may include non-volatile memory 108 (e.g., read-only memory (ROM), erasable programmable read-only memory (EPROM), electrically erasable programmable read-only memory (EEPROM), etc.), and volatile memory 110 (e.g., random-access memory (RAM)). A basic input/output system (BIOS) 112 may be stored in the non-volatile memory 108 and can include the basic routines that help to transfer information between elements within the computing device 100. The volatile memory 110 may also include a high-speed RAM, such as static RAM, for caching data.

The computing device 100 may further include or be coupled to a non-transitory computer-readable storage medium, such as a storage device 114 (e.g., the storage device 16), which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device 114 and other drives associated with computer-readable media and computer-usable media may provide non-volatile storage of data, data structures, computer-executable instructions, and the like.

A number of modules can be stored in the storage device 114 and in the volatile memory 110, including an operating system 116 and one or more program modules, such as the rules engine definer 18, which may implement the functionality described herein in whole or in part. All or a portion of the examples may be implemented as a computer program product 118 stored on a transitory or non-transitory computer-usable or computer-readable storage medium, such as the storage device 114, which includes complex programming instructions, such as complex computer-readable program code, to cause the processor device 102 to carry out the steps described herein. Thus, the computer-readable program code can comprise software instructions for implementing the functionality of the examples described herein when executed on the processor device 102. The processor device 102, in conjunction with the rules engine definer 18 in the volatile memory 110, may serve as a controller, or control system, for the computing device 100 that is to implement the functionality described herein.

An operator, such as a user, may also be able to enter one or more configuration commands through a keyboard (not illustrated), a pointing device such as a mouse (not illustrated), or a touch-sensitive surface such as a display device (not illustrated). Such input devices may be connected to the processor device 102 through an input device interface 120 that is coupled to the system bus 106 but can be connected by other interfaces such as a parallel port, an Institute of Electrical and Electronic Engineers (IEEE) 1394 serial port, a Universal Serial Bus (USB) port, an IR interface, and the like. The computing device 100 may also include a communications interface 122 suitable for communicating with the network as appropriate or desired. The computing device 100 may also include a video port (not illustrated) configured to interface with the display device (not illustrated), to provide information to the user.

Other computer system designs and configurations may also be suitable to implement the systems and methods described herein. The following examples illustrate various implementations in accordance with one or more aspects of the disclosure.

Example 1 is a method comprising obtaining, by a computing device, a plurality of input objects; inserting, by the computing device, the plurality of input objects into a rules engine, the rules engine comprising a set of rules evaluated with an input and producing an output during an execution of the rules engine; and determining, by the computing device during an execution of the rules engine, a plurality of output objects created during the execution of the rules engine and gettable attributes of each output object of the plurality of output objects, wherein the gettable attributes comprise one or more attributes of an output object of the plurality of output objects that are defined by a value that can be retrieved.

Example 2 is the method of example 1, further comprising: parallel to inserting the plurality of input objects into the rules engine and determining the plurality of output objects: determining, by the computing device, settable attributes of each input object of the plurality of input objects, wherein the settable attributes comprise one or more attributes of an input object of the plurality of input objects that can be set with a value; and creating, by the computing device, a subset of the settable attributes based on an input filter, wherein the input filter includes or excludes one or more of one or more rules of the rules engine, one or more field names of the plurality of input objects, and one or more input objects of the plurality of input objects.

Example 3 is the method of example 2, further comprising: inserting, by the computing device, the subset of the settable attributes into the rules engine.

Example 4 is the method of example 2, further comprising: subsequent to determining the settable attributes of each input object of the plurality of input objects, overwriting one or more of the settable attributes.

Example 5 is the method of example 1, further comprising: creating, by the computing device, a subset of the gettable attributes based on an output filter, wherein the output filter includes or excludes one or more of one or more rules of the rules engine, one or more field names of the plurality of output objects, and one or more output objects of the plurality of output objects.

Example 6 is the method of example 5, further comprising: creating a data structure comprising one or more rules, each rule corresponding to a gettable attribute from among the subset of the gettable attributes and a value of the gettable attribute, wherein the data structure comprises a table, a graph, or a map; and storing the data structure in a memory of the computing device.

Example 7 is a computing device that includes a memory and a processor device coupled to the memory. The processor device is to obtain a plurality of input objects; insert the plurality of input objects into a rules engine, the rules engine comprising a set of rules evaluated with an input and producing an output during an execution of the rules engine; and determine, during an execution of the rules engine, a plurality of output objects created during the execution of the rules engine and gettable attributes of each output object of the plurality of output objects, wherein the gettable attributes comprise one or more attributes of an output object of the plurality of output objects that are defined by a value that can be retrieved.

Example 8 is the computing device of example 7, wherein the processor device is further to: parallel to inserting the plurality of input objects into the rules engine and determining the plurality of output objects: determine settable attributes of each input object of the plurality of input objects, wherein the settable attributes comprise one or more attributes of an input object of the plurality of input objects that can be set with a value; and create a subset of the settable attributes based on an input filter, wherein the input filter includes or excludes one or more of one or more rules of the rules engine, one or more field names of the plurality of input objects, and one or more input objects of the plurality of input objects.

Example 9 is the computing device of example 8, wherein the processor device is further to: insert the subset of the settable attributes into the rules engine.

Example 10 is the computing device of example 8, wherein the processor device is further to: subsequent to determining the settable attributes of each input object of the plurality of input objects, overwrite one or more of the settable attributes.

Example 11 is the computing device of example 7, wherein the processor device is further to: create a subset of the gettable attributes based on an output filter, wherein the output filter includes or excludes one or more of one or more rules of the rules engine, one or more field names of the plurality of output objects, and one or more output objects of the plurality of output objects.

Example 12 is the computing device of example 11 wherein the processor device is further to: create a data structure comprising one or more rules, each rule corresponding to a gettable attribute from among the subset of the gettable attributes and a value of the gettable attribute, wherein the data structure comprises a table, a graph, or a map; and store the data structure in a memory of the computing device.

Example 13 is a non-transitory computer-readable storage medium that includes computer-executable instructions that, when executed, cause one or more processor devices to obtain a plurality of input objects; insert the plurality of input objects into a rules engine, the rules engine comprising a set of rules evaluated with an input and producing an output during an execution of the rules engine; and determine, during an execution of the rules engine, a plurality of output objects created during the execution of the rules engine and gettable attributes of each output object of the plurality of output objects, wherein the gettable attributes comprise one or more attributes of an output object of the plurality of output objects that are defined by a value that can be retrieved.

Example 14 is the non-transitory computer-readable storage medium of example 13, wherein the instructions are further to cause the processor device to: parallel to inserting the plurality of input objects into the rules engine and determining the plurality of output objects: determine settable attributes of each input object of the plurality of input objects, wherein the settable attributes comprise one or more attributes of an input object of the plurality of input objects that can be set with a value; and create a subset of the settable attributes based on an input filter, wherein the input filter includes or excludes one or more of one or more rules of the rules engine, one or more field names of the plurality of input objects, and one or more input objects of the plurality of input objects.

Example 15 is the non-transitory computer-readable storage medium of example 14, wherein the instructions are further to cause the processor device to: insert the subset of the settable attributes into the rules engine.

Example 16 is the non-transitory computer-readable storage medium of example 14, wherein the instructions are further to cause the processor device to: subsequent to determining the settable attributes of each input object of the plurality of input objects, overwrite one or more of the settable attributes.

Example 17 is the non-transitory computer-readable storage medium of example 13, wherein the instructions are further to cause the processor device to: create a subset of the gettable attributes based on an output filter, wherein the output filter includes or excludes one or more of one or more rules of the rules engine, one or more field names of the plurality of output objects, and one or more output objects of the plurality of output objects.

Example 18 is the non-transitory computer-readable storage medium of example 17, wherein the instructions are further to cause the processor device to: create a data structure comprising one or more rules, each rule corresponding to a gettable attribute from among the subset of the gettable attributes and a value of the gettable attribute, wherein the data structure comprises a table, a graph, or a map; and store storing the data structure in a memory of a computing device.

Individuals will recognize improvements and modifications to the preferred examples of the disclosure. All such improvements and modifications are considered within the scope of the concepts disclosed herein and the claims that follow.

## Claims

1. A method, comprising:
obtaining, by a computing device, a plurality of input objects;
determining, by the computing device, settable attributes of each input object of the plurality of input objects;
creating, by the computing device, a subset of the settable attributes based on an input filter;
inserting, by the computing device, the subset of the settable attributes into a rules engine, the rules engine comprising a set of rules evaluated with an input and producing an output during an execution of the rules engine;
determining, by the computing device during an execution of the rules engine, a plurality of output objects created during the execution of the rules engine and gettable attributes of each output object of the plurality of output objects;
creating, by the computing device, a subset of the gettable attributes based on an output filter; and
storing, in a memory of the computing device, one or more rules and corresponding gettable attributes and values of the gettable attributes based on the subset of the gettable attributes.

2. The method of claim 1, further comprising:
subsequent to storing, in the memory of the computing device, one or more rules and corresponding gettable attributes and values of the gettable attributes based on the subset of the gettable attributes, applying one or more explainable artificial intelligence techniques to the rules engine using inputs corresponding to the subset of settable attributes and outputs corresponding to the subset of gettable attributes.

3. The method of claim 1, wherein the settable attributes comprise one or more attributes of an input object of the plurality of input objects that can be set with a value; and/or
the gettable attributes comprise one or more attributes of an output object of the plurality of output objects that are defined by a value that can be retrieved.

4. The method of claim 1, wherein determining the settable attributes of each input object of the plurality of input objects comprises:
for each input object of the plurality of input objects:
identifying attributes of the input object that can be set with a value or one or more sub-objects of the input object; and
for each sub-object of the one or more sub-objects of the input object:
identifying attributes of the sub-object that can be set with a value.

5. The method of claim 1, further comprising:
subsequent to determining the settable attributes of each input object of the plurality of input objects, overwriting one or more of the settable attributes.

6. The method of claim 1, wherein the input filter includes or excludes one or more of one or more rules of the rules engine, one or more field names of the plurality of input objects, and one or more input objects of the plurality of input objects; and/or
the output filter includes or excludes one or more of: one or more rules of the rules engine, one or more field names of the plurality of output objects, and one or more output objects of the plurality of output objects.

7. The method of claim 1, wherein creating the subset of the settable attributes based on the input filter comprises:
creating a data structure comprising the settable attributes of each input object of the plurality of input objects and values corresponding to the settable attributes;
obtaining the input filter; and
determining, based on the input filter, the subset of the settable attributes, the subset of the settable attributes including settable attributes in the data structure that meet criteria of the input filter.

8. The method of claim 1, wherein determining, during the execution of the rules engine, the plurality of output objects created during the execution of the rules engine and the gettable attributes of each output object of the plurality of output objects comprises:
for each output object of the plurality of output objects:
identifying attributes of the output object that are defined by a value that can be retrieved or one or more sub-objects of the output object; and
for each sub-object of the one or more sub-objects of the output object:
identifying attributes of the sub-object that are defined by a value that can be retrieved;
and optionally wherein identifying the attributes of the output object comprises identifying values of the output object created, modified, or deleted during the execution of the rules engine, and identifying the attributes of the sub-object comprises identifying values of the sub-object created, modified, or deleted during the execution of the rules engine.

9. The method of claim 1, further comprising:
during the execution of the rules engine:
storing, in the memory of the computing device, each output object of the plurality of output objects prior to completion of the execution of the rules engine.

10. The method of claim 1, wherein creating the subset of the gettable attributes based on the output filter comprises:
creating a data structure comprising the gettable attributes of each output object of the plurality of output objects, values corresponding to the gettable attributes, and rules corresponding to the gettable attributes;
obtaining the output filter; and
determining, based on the output filter, the subset of gettable attributes, the subset of gettable attributes including gettable attributes in the data structure that meet criteria of the output filter.

11. The method of claim 1, further comprising:
during the execution of the rules engine:
determining a first set of values for each output object of the plurality of output objects prior to an execution of a rule of the rules engine; and
determining a second set of values for each output object of the plurality of output objects subsequent to the execution of the rule of the rules engine;
and optionally further comprising:
subsequent to the execution of the rule engine, determining a difference between a first value from among the first set of values and a second value from among the second set of values, wherein the first value and the second value correspond to an output object of the plurality of output objects; and
identifying the difference as an output of the execution of the rule engine.

12. The method of claim 1, wherein storing, in the memory of the computing device, one or more rules and corresponding gettable attributes and values of the gettable attributes based on the subset of the gettable attributes comprises:
creating a data structure comprising one or more rules, each rule corresponding to a gettable attribute from among the subset of the gettable attributes and a value of the gettable attribute, wherein the data structure comprises a table, a graph, or a map.

13. The method of claim 1, further comprising:
subsequent to creating the subset of the gettable attributes based on the output filter, inserting the subset of the gettable attributes into the rules engine;
determining, by a monitor in the rules engine during a second execution of the rules engine, whether a gettable attribute of the subset of gettable attributes is obtained; and
recording a value of the gettable attribute as an output of the rules engine.

14. A computing device, comprising:
a memory; and
a processor device coupled to the memory, the processor device configured to perform the method of any of claims 1-13.

15. A non-transitory computer-readable storage medium that includes computer-executable instructions that, when executed, cause one or more processor devices to perform the method of any of claims 1-13.
